# EUROPEAN PATENT SPECIFICATION

(11) **EP 3 254 886 B1**
(45) Date of publication and mention of the grant of the patent: **13.03.2019**
(21) Application number: 17171612.9
(22) Date of filing: 17.05.2017
(51) Int. Cl.: B60N 2/02, B60N 2/16, F15B 13/04, F15B 13/044, F16K 11/065, F16K 31/04, F16K 11/07

(54) **ADJUSTABLE LINEAR ACTUATOR VALVE**
VERSTELLBARES LINEARANTRIEBSVENTIL
SOUPAPE D'ACTIONNEUR LINÉAIRE RÉGLABLE

(30) Priority: 24.05.2016 GB 201609125
(43) Date of publication of application: 13.12.2017
(73) Proprietor: Norgren GmbH, 70736 Fellbach (DE)
(72) Inventor: KOSMALLA, Stefan, 47661 Issum (DE); KUHLMANN, Hans-Peter, 46509 Xanten (DE); RIEDEL, Ralph, 47495 Rheinberg (DE); TESCHKE, Ulrich, 47495 Rheinberg (DE); HELLER, Jorg, 86504 Merching (DE); HOYMANN, Karl-Heinz, 46519 Alpen (DE); WEHRENS-KLAUS, Martin, 45721 Haltern am See (DE)
(74) Representative: Gray, James

(56) References cited:
- EP-A1- 2 916 052
- WO-A2-2005/123445
- DE-A1-102013 021 057
- DE-A1-102013 021 317
- US-A1- 2008 121 828

## Description

The present invention relates to a linear actuator valve and an adjustable support comprising said linear actuator valve. In a particular embodiment, the invention further relates to a height adjuster, such as a vehicle seat adjuster, comprising the adjustable support with the new linear actuator valve.

Linear actuator valves are generally known in the art and often used for activation of an adjustable support, such as the support frame of a vehicle seat. These known actuators are employed to either adjust or maintain a position of the vehicle seat, which can become difficult when forces applied to the vehicle seat are not constant. In order to overcome this problem, prior art reference WO2009/018843 suggests using a linear actuator valve to communicate pneumatically with an air spring that acts as an actuator for height adjustment of a work piece. The linear actuator valve moves together with a support frame of in response to changes in the force applied to the actuator. Once the actuator moves a certain distance, the linear actuator valve either opens or closes to allow pneumatic pressure in the air spring actuator to increase or decrease respectively.

DE-A-10 2013 021317 discloses a further linear actuator valve.

Linear actuator valves are also commonly used for the height adjustment of vehicle seats, in which the linear actuator valve is connected to a support frame of a vehicle seat at opposite first and second ends. In particular, a first end of the linear actuator valve is connected to a base member of the support frame, whereas a second end of the linear actuator valve is connected to a moveable member via a central axle of scissor-like arms and. The linear actuator valve is adapted to provide an air spring with pressurised fluid, such as pressurised air in order to adjust and remain the height of the support frame. If pressure applied to the top of the support frame increases, the moveable member will be forced downwards towards the base member, thereby compressing the air spring and the linear actuator valve. Upon compression, the linear actuator valve will switch and allow more pressurised air to be introduced into the air spring until the additional load is compensated. Alternatively, if load is removed from the support frame, the air spring pushes the moveable member away from the base. The linear actuator valve will be extended, due to the movement of the moveable member with respect to the base member. Upon extension of the actuator valve, the valve will switch again and release pressurised air from the air spring to compensate for the missing load.

Sometimes it is necessary to change the height of the support frame permanently. As such, the compensating function of the linear actuator valve is not always required. Instead, the linear actuator valve will then be used to introduce or release air from the air spring, without compression or extension, that is without movement of the first or second end of the linear actuator valve. To this end, the position of a valve slider with respect to a valve housing can be changed without the need to move the first or second end of the actuator valve. Prior art solutions comprise a bowden cable, attached to the valve slider, which can be used to move the valve slider with respect to the valve housing without movement of the first or second end of the linear actuator valve. For example, the bowden cable can be extended to move the valve slider further into the valve housing, thereby increasing the amount of pressurised air supplied to the air spring. Alternatively, if the support frame should be lowered, the bowden cable can be contracted to pull the valve slider out of the valve housing, thereby switching the valve to release air from the air spring.

This known solution with an adjustment mechanism comprising a bowden cable is complicated and causes failure of the cable due to significant stresses on the cable during normal use. Moreover, the bowden cable adjustment mechanism of known linear actuator valves is only adjustable at large increments and thus can only be used to adjust the height of a vehicle seat in a step-wise manner.

In view of the problems described hereinbefore, it is an object of the present invention to provide a linear actuator valve which is less susceptible to wear and, at the same time, provides for a more continuous adjustment of a corresponding support frame.

In a first embodiment, the present invention relates to a linear actuator valve comprising a valve housing extending along a longitudinal axis and comprising a first fluid port connectable to a pressurised fluid source, and a second fluid port connectable to the first fluid port. The actuator further comprises a support member moveable relative to the valve housing along a first axis, which is substantially parallel to the longitudinal axis of the valve housing and a valve slider slidably moveable within the valve housing, said valve slider being moveable between a first and second position. In the first position, the first fluid port is disconnected from the second fluid port whereas in the second position, the first fluid port is connected with the second fluid port. The valve housing further comprises a third fluid port connectable to the second fluid port, and wherein the valve slider is further moveable from its first position, in which the first fluid port is disconnected from the third fluid port, into a third position in which the second fluid port is connected to the third fluid port, and vice-versa. In the third position, the first fluid port is disconnected from the second fluid port of the valve housing. The valve slider is connected to the support member. The actuator valve is adapted to move the valve slider between its first, second and third position, when the support member and the valve housing move relative to each other, and wherein the actuator valve further comprises an electro-mechanical actuator adapted to selectively move the valve slider between its first, second and third position.

In contrast to prior art solutions, the valve slider is movable by an electro-mechanical actuator instead of the purely mechanical bowden cable. Accordingly, the displacement of the valve slider relative to the valve housing can be adjusted at very small intervals, in a continuous manner. The electro-mechanical actuator also allows for electrically controlled height adjustments. In the case of a vehicle seat, this height adjustment can be controlled by the on-board computer of the car, which may comprise a database of preferred seat height settings for each individual operator.

In another embodiment, the electro-mechanical actuator is rigidly connected or connectable to the support member. In other words, the electro-mechanical actuator is directly attached to the support member, which reduces the forces required to adjust the linear actuator valve. Furthermore, the electro-mechanical actuator of this embodiment can be directly connected to the valve slider, without the need for any connecting cables. Finally, according to this embodiment, the linear actuator valve further comprises a very compact arrangement. While the electro-mechanical actuator is rigidly connected to the support member, it should be understood that this rigid interconnection may be releasable, for example by means of fastening screws used to connect the electro-mechanical actuator with the support member.

According to another aspect, the electro-mechanical actuator comprises an electric motor, which is connected to the valve slider via a gearing mechanism. The skilled person will understand that the gearing mechanism can be used to convert the actuation force of the electric motor into a translational movement of the valve slider with respect to the support member. As such, the smallest possible height adjustment of the vehicle seat is defined by the gearing mechanism, rather than the electric motor itself.

In another embodiment, the electric motor is adapted to rotate a drive shaft about a motor axis, said motor axis being arranged in parallel to the longitudinal axis of the valve housing. In particular, the motor axis may extend along a longitudinal axis of the valve slider, which will result in a particularly compact arrangement. As will be described in more detail below, this arrangement can be used to move the valve slider between its first and second position directly by means of the rotating drive shaft.

In an alternative embodiment, the motor axis is arranged in parallel to the longitudinal axis of the valve housing but spaced apart from the longitudinal axis of the valve slider. This arrangement will shorten the length of the linear valve actuator significantly, if space requirements are an issue.

According to another aspect, the gearing mechanism comprises a connector shaft, the connector shaft extending along the motor axis of the electric motor, wherein the electric motor is adapted to rotate the connector shaft about the motor axis. Preferably, the connector shaft can be used to connect the valve slider to the support member and, at the same time, acts as a mechanical connection between the electric motor and the valve slider for moving the latter between its first, second and third position. As such, the connector shaft may be adapted to releasably connect the drive shaft of the electric motor with the valve slider.

In one embodiment, the connector shaft may comprise an external/internal thread adapted to mesh with an internal/external thread of the valve slider, and the connector shaft may be connected to move the valve slider in a first linear direction upon rotation of the drive motor in a first direction and a second, opposite linear direction upon rotation of the drive motor in a second, opposite direction. This arrangement is particularly useful if the electric motor is aligned with the longitudinal axis of the valve slider. In order to transfer the rotation of the connector shaft into a linear movement of the valve slider, the valve slider may comprise an anti-rotation lock adapted to stop the valve slider from rotating together with the connector shaft.

In an alternative embodiment, the connector shaft is connected to the valve slider by means of a connector piece, the connector piece extending between the motor axis and the longitudinal axis of the valve slider. This embodiment applies to arrangements in which the connector shaft is spaced apart from the longitudinal axis of the valve slider. According to this embodiment, it is feasible to arrange the connector shaft either inside or outside of the support member. If the connector shaft is arranged outside of the support member, the connector piece extends through a slot opening of the support member, as will be discussed in more detail below.

In another embodiment, the connector shaft comprises an external thread adapted to mesh with an internal thread at a first end of the connector piece, wherein the connector shaft is adapted to move the connector piece in a first linear direction upon rotation of the drive motor in a first direction and in a second, opposite linear direction upon rotation of the drive motor in a second, opposite direction. In other words, the connector piece of this embodiment is screwed onto the external thread of the connector shaft and comprises an anti-rotation lock, which will cause the connector piece to move in a longitudinal direction with respect to the connector shaft upon rotation thereof.

According to another aspect, the connector piece may comprise a recess at a second end, opposite the first end, adapted to receive the valve slider. In particular, the recess at the second end of the connector piece may be adapted to receive a second end of the valve slider, which is arranged outside of the valve housing, that is, opposite a first end, which acts as a plunger within the valve housing. The recess of the connector piece is constructed to move the valve slider along a longitudinal direction. In simple terms, the recess is adapted to pull the second end of the valve slider away from the valve housing and to push the valve slider back into the valve housing.

According to another embodiment, the electric motor is adapted to rotate a drive shaft about a motor axis that is arranged transverse to the longitudinal axis of the valve housing.

In another embodiment, the linear actuator valve further comprises a sensor device adapted to determine the position of the valve slider. The sensor device can therefore provide feedback to a controller about the location of the valve slider with respect to the support member. In case of a vehicle seat application, the on-board computer of a car can use the feedback of the sensor device to determine the nominal position of the seat. Alternatively, the sensor device may be adapted to determine the distance between the first and second ends of the linear valve actuator. To this end, the sensor device may be configured to measure the position of the support member with respect to the valve housing. According to this alternative embodiment, the feedback from the sensor device, which can be provided to a controller, relates directly to the distance between the base and movable members of the support frame. In a seat application, said feedback directly relates to the height of the support frame, which can be used by a controller, such as an on-board computer, to dynamically regulate height adjustment via the linear actuator valve.

In another embodiment, the valve slider has a first end slidably received within the valve housing and a second, opposite end, wherein a first sensor element of the sensor device is attached to the second end of the valve slider. The first sensor element may be any known sensor element, such as an electrical, optical or mechanical sensor attached to the second end of the valve slider and adapted to determine movement between the valve slider and the support member.

The sensor device may further comprise a second sensor element, which is attached to the support member, the second sensor element comprising a guide groove adapted to guide the first sensor element upon movement of the valve slider. In one aspect, the sensor device with such first and second sensor elements may be a potentiometer preferably a taper potentiometer adapted to change electrical resistance upon movement of the valve slider with respect to the guide groove. The change in resistance can then be determined by a controller as a feedback signal indicating the position of the valve slider within the guide groove.

In another embodiment, the support member may define a casing adapted to at least partially enclose the second end of the valve slider in its first, second and third position. The support member may be constructed as a slidable guide member, at least partly surrounding the valve housing. According to this embodiment, the support member performs two functions, namely to compress or extend the linear actuator valves in response to varying loads applied on the support frame and to protect the exposed, second end of the valve slider from environmental conditions.

While the present disclosure repeatedly refers to the linear actuator valve in connection with a pneumatic actuator, it should be understood that the linear actuator valve of the present invention may further be used to control hydraulic actuators, that is, to control the fluid flow of hydraulic fluids.

In another embodiment, the present invention relates to an adjustable support comprising a first member moveably connected to a second member and an actuator assembly adapted to move the first and second members with respect to each other, wherein the actuator assembly comprises the linear actuator valve as described hereinbefore. In one aspect of the adjustable support, the valve housing may be connected to the first member, wherein the support member may be connected to the second member of the adjustable support, such that when the first and second members are moved towards each other, the valve slider is moved from its first position into its second position.

The actuator assembly may comprise a linear actuator comprising at least one fluid port connected to the second fluid port of the linear actuator valve. In that case, the linear actuator valve is adapted to supply the linear actuator with pressurised fluid if the valve slider is moved from its first position into its second position, upon movements of the first and second members towards each other. Accordingly, the linear valve actuator can be adapted to maintain the position of the first member with respect to the second member, if loads on the adjustable support are increased.

In another embodiment, the actuator assembly comprises a control unit connected to the electro-mechanical actuator and adapted to adjust a distance between the first and second members. In particular, the control unit may be adapted to move the electro-mechanical actuator to selectively move the valve slider between its first, second and third positions, depending on a desired distance between the first and second members. The control unit may include a control interface for an operator to set the required distance between the first and second members (such as the distance between a base and a seat upholstery of a vehicle seat). The control unit may comprise a lookup table including information regarding the amount and direction of movement of the valve slider, required to obtain the desired distance between the first and second members. When an operator chooses a desired distance between the first and second members, such as the height of a vehicle seat, the control unit will look up the corresponding required valve slider displacement and activate the electro-mechanical actuator accordingly. The control unit may use feedback signals from the aforementioned sensor device to adjust the valve slider displacement accurately.

The present invention further relates to a vehicle seat comprising the adjustable support. However, the skilled person would understand that the application of the linear valve actuator is not restricted to vehicle seats and may be used in any moveable platform requiring reliable and accurate height adjustment and maintenance functions.

The present invention will now be described in more detail with reference to the particular embodiments shown in the drawings. While the detailed description is directed to the application of a vehicle seat, it should be understood that this is only to ease the understanding of the reader and does not restrict the scope of the invention. The embodiments shown in the attached illustrations show:-
FIGURE 1 is a schematic sectional side view of a linear actuator valve;
FIGURE 2 is a schematic side view of the linear actuator valve shown in Figure 3 attached to an adjustable support;
FIGURE 3 is a sectional side view of a linear actuator valve according to a first embodiment of the present invention;
FIGURE 4 is a perspective, part-sectional view of the first embodiment shown in Figure 5; and
FIGURE 5 is a perspective side view of a linear actuator valve according to a second embodiment of the present invention.

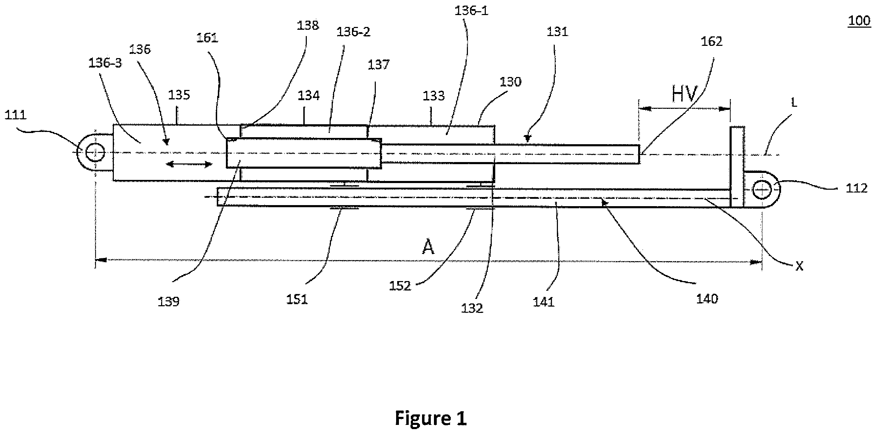

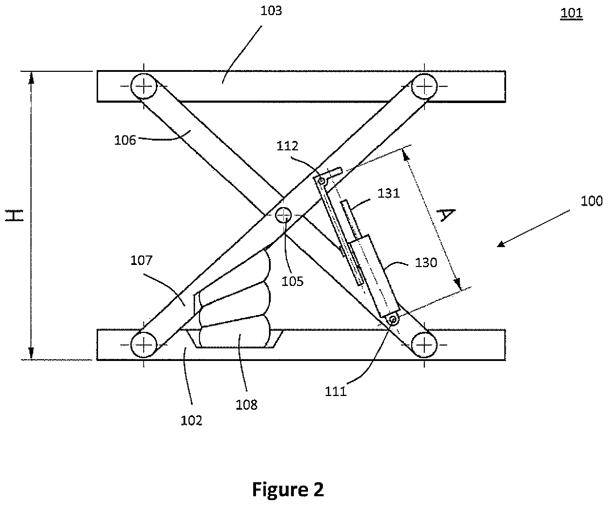

The basic concept of the linear actuator valve and the corresponding adjustable support is schematically shown in Figures 1 and 2. The linear actuator valve shown in Figure 1 comprises a valve housing 130, which extends along a longitudinal axis L. The valve housing 130 shown in Figure 1 has a cylindrical housing portion defining an inner cavity 136. As will be described in more detail below, the cavity 136 is divided into three chamber, 136-1, 136-2 and 136-3 by means of gaskets 137, 138 in conjunction with piston 139 of the valve slider 131. Each of the chambers 136-1, 136-2, 136-3 comprises a fluid port. The first chamber 136-1 has a first fluid port 133, which is connectable to a pressurised fluid source, such as pressurised air or pressurised hydraulic fluid. The second chamber 136-2 comprises a second fluid port 134, which is preferably connected to a linear actuator (108 Fig. 2). The third chamber 136-3 of the valve housing 130 comprises a third fluid port 135, which is connected to the environment, or a waste tank, that is the third fluid port 135 preferably acts as an exhaust port. It will be appreciated that the third chamber 135 is an optional chamber. It is alternatively feasible to configure the second gasket 138, shown in Fig. 1, as an exhaust port. That is, air passing second gasket 138 would be directly released to the environment.

A valve slider 131 is slidably moveable within the valve housing 130, as indicated by the double arrow in Figure 1. In the embodiment of Figure 1, the valve slider is concentrically aligned with the valve housing 130, and hence has a longitudinal axis, which is aligned with the longitudinal axis L of the valve housing 130.

Figure 1 shows a first position of the valve slider 131 within the valve housing 130. In its first position, a piston 139 of a first end 161 of the valve slider 131 is arranged within the cavity 136 of the valve housing 130 such that the first chamber 136-1 is disconnected from the second chamber 136-2, due to the sealing engagement between the piston 139 and the first gasket 137. Consequently, the first fluid port 133 is disconnected from the second fluid port 134 in the first position of the valve slider 131. The piston 139 of the valve slider 131 also disconnects the second chamber 136-2 from the third chamber 136-3, when the valve slider 131 is in its first position. This is, in turn, due to the sealing engagement between the gasket 138 and the outer circumference of the piston 139. The second fluid port 134 is, therefore, disconnected from the third fluid port 135 in the first position of the valve slider 131.

As will be described in more detail below, the valve slider 131 can be moved along the longitudinal axis L towards the first chamber 133 (third position), that is to the right in Figure 1, or towards the third chamber 135 (second position), that is to the left in Figure 13. By moving the valve slider 131 towards the third chamber 135, the piston 139 will be pushed out of engagement with the first gasket 137, thereby connecting the first and second chambers 136-1 and 136-2 and the first and second fluid ports 133, 134 respectively. If the valve slider 131 is moved in the opposite direction, towards the first chamber 136-1, the piston 139 will disengage from the second gasket 138, thereby connecting the second chamber 136-2 with the third chamber 136-3 and the second and third fluid ports 134, 135 respectively. The valve slider 131 is in its second position, if the first and second chambers 136-1, 136-2 and the first and second fluid ports 133, 134 respectively are connected.

As will be appreciated by the skilled person, the valve housing 130 and the piston 139 are sized and arranged such that the second chamber 136-2 is disconnected from the third chamber 136-3, when the valve slider 131 is in its second position. In other words, the piston 139 of the valve slider will remain engaged with the second gasket 138 when the valve slider is in its second position. When the valve slider 131 is in its third position, on the other hand, the first and second chambers 136-1, 136-2 are disconnected and the second and third chambers 136-2, 136-3 are connected. As a result of this arrangement, the first and third fluid ports 133, 135 are never directly connected to each other.

In the illustration of Figure 1, the valve slider 131 comprises a drive shaft 132 and a piston 139, which has a larger diameter than the drive shaft 132. The piston 139 is sized so as to engage with the first and second gaskets 137, 138. Of course, it should be understood that the valve slider 131 could have any size or arrangement within the valve housing 130 that would allow for the above-described functionality. The valve slider 131 comprises a first end 161, which is received within the housing 130 and an opposite, second end 162 adapted to remain outside of the valve housing 130. The second end 162 of the valve slider 131 is attached to a support member 140 at a distance HV in the longitudinal direction L of the valve housing 130. In a first mode of operation, which will be described in more detail below, the distance HV between the valve slider 131 and the support member 140 will remain constant and the valve slider will move together with the support member 140.

The support member 140 of the linear actuator valve 100 is moveable, preferably slidably movable, with respect to the valve housing 130. To this end, the support member 140 of the schematic embodiment shown in Figure 1 comprises a guide shaft 141 which is received within guide elements 151, 152 attached to the valve housing 130. Of course, the support member 140 may be arranged in any other known fashion that would allow the support member 140 to move along an axis X, which is substantially parallel to the longitudinal axis L of the valve housing 130. In fact, the support member 140 could be an integral part of the free end of the valve slider itself.

The linear actuator valve 100 extends between a first end 111 at the valve housing 130 and a second end 112 at the support member 140. As such, the linear actuator valve 100 can be defined as having a longitudinal length A between the first end 111 and the second end 112. Figure 2 shows a schematic of an adjustable support 101 according to the present invention.

The adjustable support comprises a first member 102 and second member 103, which is moveably connected to the second member. In particular, the second member 103 of Figure 2 can be moved vertically with respect to the first member 102 by means of a scissor lift arrangement. The scissor lift arrangement comprises first and second scissor members 106, 107, each of which connect one end of the first member 102 to an opposite end of the second member 103. The scissor members 106 and 107 are centrally connected to each other by means of a connector pin 105. Accordingly, the first and second scissor members 106, 107 are pivotably moveable with respect to each other about connector pin 105.

In Figure 2, the linear actuator valve 100 shown in Figure 1 is connected to the first scissor member 106 via its first end 111 and to the second scissor member 107 via the second end 112. As a consequence, the support member 140 will slide within the guide elements 151, 152 with respect to the valve housing 130 in response to a vertical movement of the second member 103, that is in response to a pivoting movement of the first scissor member 106 with respect to the second scissor member 107. As will be appreciated, movement of the support member 140 with respect to the valve housing 130 will result in a change of the length A of the linear actuator valve 100. The length A of the linear actuator valve 100 is, therefore, a measure for the angle between the first and second scissor members 106, 107. Moreover, the angle between the first and second scissor members 106, 107 is a measurement for the distance H between the first and second members 102, 103 of the adjustable support 101. Consequently, the length A of the linear actuator valve 100 is a measure for the distance H between the first and second member 102, 103 of the adjustable support. Of course, the skilled practitioner will appreciate that the linear actuator valve 100 does not have to be arranged in the way shown in Figure 2 to achieve a linear dependency between length A and distance H. For example, the linear actuator valve could be directly attached to the first member 102 with its first end 111 and directly attached to the second member 103 with its second end 112, particularly in a scenario in which the adjustable support 101 does not comprise any scissor members.

As further depicted in Figure 2, the adjustable member 101 comprises a linear actuator 108, such as an air spring or a hydraulic ram, which is preferably arranged in parallel to the actuator valve 100. The linear actuator valve 100 is connected to the linear actuator 108 with its second fluid port 134. In a first operation mode, the linear actuator valve 100 is adapted to assist the linear actuator 108 with keeping the first member 102 at a pre-determined distance H from the second member 103. In more detail, in a case where an increased load is applied to the adjustable support 101 that pushes the second member downwards towards the first member 102, the distance H between the first and second members 102, 103 will decrease, thereby pushing the first and second ends 111, 112, that is, the valve housing 130 and the support member 140 of the linear actuator valve 100 together, which will cause the length A of the valve 100 to decrease.

Referring back to the illustration in Figure 1, a sliding movement of the support member 140 with respect to the valve housing 130 that decreases the length A between the first and second ends 111, 112 will push the valve slider 131 towards the third chamber 136-3 of the valve housing 130. This is because, in the first operating mode, the distance HV between the valve slider 131 and the support member 140 is fixed. As described hereinbefore, the movement of the valve slider 131 towards the third chamber 136-3 will transfer the valve slider from its first position (Figure 1) into its second position. Consequently, the first fluid port 133 and the first fluid chamber 136-1 are connected to the second chamber 136-2 and the second fluid port 134, thereby allowing pressurised fluid to flow between the first and second fluid ports 133, 134. The pressurised fluid will then be provided to the linear actuator 108 (e.g. air spring) via the second fluid port 134. Accordingly, the pressurised air within the air spring will increase for as long as the first and second fluid ports 133, 134 remain connected. The force created by the pressurised air within the air spring acts against the load applied to the second member 103 and will eventually overcome the latter, thereby increasing the distance H between the first and second members 102, 103. This increase in distance H will, in turn, act to push the valve housing 130 and the support member 140 apart, thereby increasing the length A. By increasing the length A the valve slider 131 will be transferred back from its second position (mainly within the third chamber 136-3) into its first position, shown in Figure 1. Consequently, in its first operating mode, the linear actuator valve 100 is adapted to maintain the length A between the first and second ends 111, 112.

Analogous to the operating example described in the paragraph above, the linear actuator valve 100 is also adapted to restore length A between the first and second ends 111, 112 if the support member 140 and the valve housing 130 are pulled apart. This scenario applies when load is removed from the second member 103 in Figure 2. In that case, the pressure within the linear actuator 108 (e.g. air spring) is now higher than the load pushing the second member 103 towards the first member 102 and thus the air spring will push the first and second member 102, 103 apart, thereby increasing the distance H. This increase in distance H forces the support member 140 and the valve housing 130 apart from each other, thereby increasing length A between the first and second ends 111, 112. The valve slider 131, which is rigidly connected to the support member 140, is then pulled out of the valve housing 130, that is towards the first chamber 133 into the third position of the valve slider 131. In the third position of the valve slider 131, the third fluid port 135 and the third chamber 136-3 are connected to the second fluid port 134 and the second chamber 136-2. Consequently, the second fluid port 134 is now fluidly connected to the third fluid port 135. Since the third fluid port 135 is an exhaust port, the linear actuator 108 is now connected to the exhaust port via the second fluid port 134 and will thus start releasing the pressure within the linear actuator 108. As the pressure of the linear actuator 108 is reduced, the force created by the air spring will fall to match the decreased load on the second member 103. This will reduce the distance H until the valve slider 131 is once again transferred to its first position. In summary, the linear actuator valve 100 acts as a regulator for maintaining the distance H between the first and second members 102, 103 in its first mode of operation.

In a second mode of operation, the linear actuator valve 100 assists in adjusting the distance H between the first and second members 102, 103. To this end, it is necessary to displace the valve slider 131 within the valve housing 130 while the support member 140 and the valve housing 130 remain static. The distance HV is increased, if the valve slider 131 is pushed into the valve housing 130, towards its second position, thereby connecting the first and second fluid ports 133, 134. Similar to the first mode of operation, this will result in pressurised fluid flowing from the first fluid port 133 towards the second fluid port 134, thereby increasing the fluid pressure within the linear actuator 108. As a consequence of the increased pressure within the linear actuator 108, the distance H will increase, thereby pulling the support member 140 and the valve housing 130 apart (increasing length A). Increasing the length A between the first end 111 and the second end 112 will again pull the valve slider 131 back into its first position, shown in Figure 1. In other words, increasing the distance HV between the valve slider 131 and the support member 140 will result in a permanent increase in distance H and length A respectively,

On the other hand, the distance HV between the valve slider 131 and the support member 140 is decreased, if the valve slider 131 is pulled out of the valve housing 130, i.e. towards the first chamber 136-1. As a consequence, the third fluid port 135 is again fluidly connected to the second fluid port 134, thereby releasing air from the linear actuator 108. The resulting pressure drop will cause the distance H to decrease and hence compress the linear actuator valve 100 by pushing the support member 140 and the valve housing 130 towards each other. As the support member 140 and the valve housing 130 are pushed towards each other, the valve slider 131 is again transferred back from its third position into its first position shown, in Figure 1. As such, a decrease in the distance HV will result in a decreased distance H between the first and second members 102, 103 of the adjustable supporter 101. In summary, the linear actuator valve acts to support the adjustment of the distance between the first and second members 102, 103 in its second mode of operation.

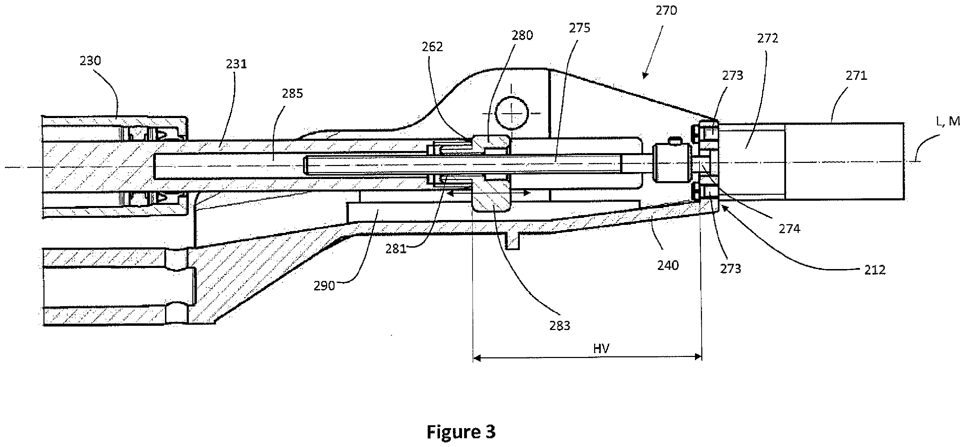

Figures 3 to 5 show two different ways of adjusting the position of valve slider 131 with respect to the valve housing 130, thereby changing the distance HV between the support member and the valve slider. In both embodiments, the linear actuator valve 200, 300 comprises an electro-mechanical actuator 270, 370 adapted to selectively move the valve slider between its first, second and third positions.

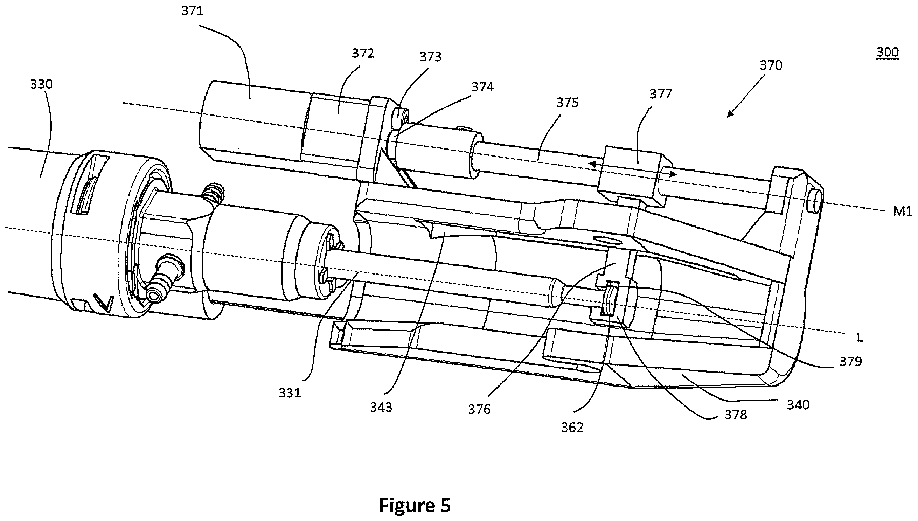

With particular reference to the first embodiment shown in Figure 3, the electro-mechanical actuator 270 comprises an electric motor 271 that is connected to the valve slider 231 via a gearing mechanism 272. The electric motor 271 with the gearing mechanism 272 is rigidly attached to the support member 240 by means of fastening screws 273. The electric motor 271 comprises a motor axis M, which according to the first embodiment in Figure 5, is aligned with the longitudinal axis L of the valve housing 230. The electro-mechanical actuator 270 further comprises a connector shaft 275, which is connected to a drive shaft 274 of the electric motor 271 at a first end. The connector shaft 275 connects the drive shaft 274 of the electric motor 271 with the valve slider 231.

According to the embodiment of Figure 3, the connector shaft 275 extends along the longitudinal axis L of the valve housing 230 and comprises external threads that mesh with internal threads of the valve slider 231.

As can be derived from the illustration, the valve slider 231 comprises a releasable connector 280 which is releasably attached to the second end 262 of the valve slider 231. The connector 280 comprises internal threads 281, which are adapted to mesh with the external threads of the connector shaft 275. Alternatively, the valve slider and the connector 280 could be formed as a one-piece.

The valve slider 231 further comprises a blind bore 285 extending from its second end 262 towards the first end. The blind bore 285 is preferably sized to be able to receive the entire length of the connector shaft 275.

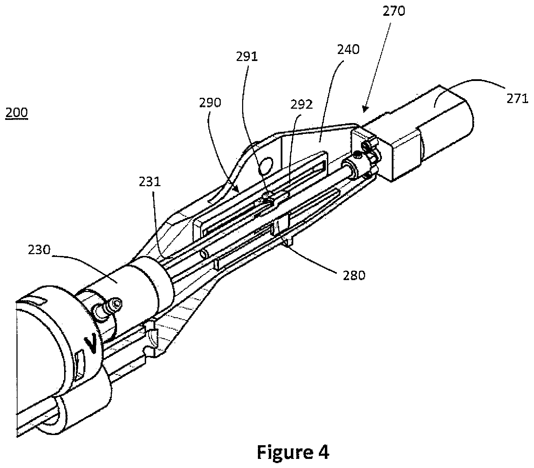

The connector shaft 275 and the connector 280 form a lead screw arrangement that can be used to transform the rotary movement of the electric motor 271 into a linear sliding movement of the valve slider 231. To this end, the connector 280 further comprises an anti-rotation protrusion 283, which is adapted to be received in a guide groove 295 (only one side of the guide groove is shown in Figures 3 and 4). It will be understood that the protrusion 283 is only slidable along the direction of the double arrow in Figure 5 and thus prevents the connector 280 from rotating together with the connector shaft. When the electric motor 271 is rotated in a first direction, the lead screw arrangement of the connector shaft 275 and the connector 280 will cause the valve slider 231 to move into the valve housing 230. If the electric motor 271 is rotated in a second, opposite direction, the lead screw arrangement will cause the valve slider 231 to be pulled out of the valve housing 230. As the valve slider 231 is pulled out of the valve housing 230, the connector shaft 275 is moved further into the blind bore 285 and the connector 280 moves closer to the second end 212 of the linear actuator. In other words, as the valve slider 231 is pulled out of the valve housing 230, the distance HV between the second end 262 of the valve slider and a back end of the support member 240 decreases. If, on the other hand, the valve slider 231 is pushed further into the valve housing 230, the distance HV between the second end 262 of the valve slider 231 and the back end of the support member 240 increases, which will cause a temporary connection between the first and second chambers 136-1, 136-2 as described in detail hereinbefore.

Figure 4 shows the electro-mechanical actuator 270 in a perspective side view. According to this embodiment, the linear actuator valve comprises a sensor device 290, which is adapted to determine the position of the valve slider 231 with respect to the support member 240. The sensor device 290 shown in Figure 4 comprises a first sensor element 291 connected to the connector 280. The first sensor element 291 is slidable together with the connector 280 along a second sensor element 292, which comprises a guide groove. As the valve slider 231 slides in and out of the valve housing 230, the first sensor element 291 slides along the guide groove of the second sensor element 292. The second sensor element 292 is constructed to determine the position of the first sensor element 291 continuously, or intermittently. In the particular example of Figure 4, the sensor device is a taper potentiometer which changes its electrical resistance upon movement of the valve slider 231 with respect to the support member 240.

A second embodiment of the electro-mechanical actuator is shown in Figure 5. Similar to the first embodiment, the electro-mechanical actuator 370 according to the second embodiment comprises an electric motor 371 comprising a gear mechanism 372 and a drive shaft 374 adapted to rotate a connector shaft 375 about a motor axis M1. The electro-mechanical actuator 370 is rigidly attached to the support member 340 (via screws 373) at a front end of the support member 340, which faces the valve housing 330.

In contrast to the first embodiment, the electric motor and the connector shaft 375 are arranged along a motor axis M1, which is spaced apart from the longitudinal axis L of the valve housing 330. The motor axis M1 is substantially parallel to the longitudinal axis L. As will be appreciated, this arrangement is significantly shorter than the first embodiment shown in Figures 3 and 4.

In order to connect the connector shaft 375 with the second end 362 of the valve slider 331, the electro-mechanical actuator 370 shown in Figure 5 comprises a connector piece 376 extending between the motor axis M1 and longitudinal axis L. Similar to the first embodiment, the connector shaft 375 comprises external threads, which are adapted to mesh with internal threads of a first end portion 377 of the connector piece 376. Accordingly, the first end portion 377 of the connector piece 376 comprises a through hole with internal threads that mesh with the external threads of the connector shaft 375.

Figure 5 shows that the electric motor 371 and the connector shaft 375 are arranged outside of the support member 340, which is constructed as a casing that partially encloses the end 362 of the valve slider 331. As such, the connector piece 376 extends through a slot opening 343 within the support member 340 to connect to the valve slider 331. The slot opening 343 of the support member 340 also serves as a means for stopping the connector piece 376 from rotating together with the connector shaft 375. The connector piece 376 comprises a recess 379 at a second end portion 378. The recess 379 is adapted to receive the second end 362 of the valve slider 331 in such a way that longitudinal movement of the connector piece 376 with respect to the support member 340 can be transferred to the valve slider 331 in both directions, that is in and out of the valve housing 330.

As can be derived from Figure 5, the connector shaft 375 and the first end portion 377 of the connector piece 376 work together as a lead screw arrangement. Since the connector piece 376 is stopped from rotating together with the connector shaft 375, the connector piece 376 can travel linearly along the direction of the motor axis M1, as indicated by the double arrow in Figure 5. If the connector shaft 375 is rotated by the drive shaft 374 of electric motor 371 in a first direction, the connector piece 376 is moved linearly along axis M1, away from the electric motor 370. At the same time, the connector piece 376 will pull the valve slider 331 along, that is out of the valve housing 330. If the connector shaft 335 is rotated in a second, opposite direction, the connector piece 376 travels linearly along axis M1 towards the electric motor 370, thereby pushing the valve slider 331 back into the valve housing 330. Of course, the electro-mechanical actuator 370 according to the second embodiment may also comprise a sensor device, similar to the one shown in Figures 4 and 5. The first sensor element would then be attached to the second end portion 378 of the connector piece 376.

In particular, the electric motor does not need to be arranged in parallel to the longitudinal axis of the valve housing. Instead, the motor axis of the actuator may be arranged transverse, preferably perpendicular to the longitudinal axis of the valve housing. In this case, the electric motor may be connected to the valve slider by a bevel gear arrangement, in which a first bevel gear is driven by the connector shaft to drive a second bevel gear, which sits on an external thread of the valve slider. Alternatively, the connection between the electric motor and the valve slider could be made by a worm gear assembly, in which the connector shaft acts as a worm driving a worm wheel that sits on an external thread of the valve slider. In another alternative, the connector shaft could be connected to a spur wheel, which is adapted to mesh with gear teeth arranged on a corresponding surface of the valve slider. The electric motor may be connected to the valve slider via a winch mechanism, in which rotation of the electric motor causes a winch that is attached to the valve slider to wind up or off in order to move the valve slider. It will be appreciated by the skilled person that the winch arrangement requires a bias that pulls the valve slider into the valve housing.

Finally, it should be noted that the electro-mechanical actuator does not need to be attached to the support member. In fact, according to some embodiments of the present invention, the support member and the electro-mechanical actuator may even be an integral part of the valve slider, the free second end of which would then represent the second end of the actuator valve.

## Claims

1. A linear actuator valve (100) comprising:
• a valve housing (130) extending along a longitudinal axis (L) and comprising a first fluid port (133) connectable to a pressurized fluid source, a second fluid port (134) connectable to the first fluid port (133) and a third fluid port (135) connectable to the second fluid port (134);
• a support member (140) movable relative to the valve housing (130) along a first axis, which is substantially parallel to the longitudinal axis (L) of the valve housing (130);
• a valve slider (131) slidably movable within the valve housing (130), said valve slider (131) being movable between a first position, in which the first fluid port (133) is disconnected from the second fluid port (134), and a second position, in which the first fluid port (133) is connected with the second fluid port (134), and vice versa, wherein the valve slider (131) is further movable from its first position, in which the second fluid port (134) is disconnected from the third fluid port (135), into a third position, in which the second fluid port (134) is connected to the third fluid port (135) and disconnected from the first fluid port (133), and vice versa, the valve slider (131) being connected to the support member (140),
wherein the actuator valve (100) is adapted to move the valve slider (131) between its first, second and third position, when the support member (140) and the valve housing (130) move relative to each other, and wherein the actuator valve (100) further comprises an electro-mechanical actuator (270) adapted to selectively move the valve slider (131) between its first, second and third positions.

2. The linear actuator valve (100) of claim 1, wherein the electro-mechanical actuator (270) is rigidly connected or connectable to the support member (140).

3. The linear actuator valve (100) of claim 1 or 2, wherein the electro-mechanical actuator (270) comprises an electric motor (271), said electric motor (271) being connected to the valve slider (131) via a gearing mechanism (272).

4. The linear actuator valve (100) of claim 3, wherein the electric motor (271) is adapted to rotate a drive shaft (132) about a motor axis (M), said motor axis (M) being arranged in parallel and/or transverse to the longitudinal axis (L) of the valve housing (130).

5. The linear actuator valve (100) of claim 4, wherein the motor axis (M) extends along the longitudinal axis of the valve slider (131) or the motor axis (M) is spaced apart from the longitudinal axis of the valve slider (131) and/or wherein the gearing mechanism (272) comprises a connector shaft (275), the connector shaft (275) extending along the motor axis (M) of the electric motor (271), and wherein the electric motor (271) is adapted to rotate the connector shaft (275) about the motor axis (M) and/or wherein the connector shaft (275) is adapted to releasably connect the drive shaft (274) of the electric motor (271) with the valve slider (131).

6. The linear actuator valve (100) of claim 5, wherein the connector shaft (275) comprises an external/internal thread adapted to mesh with an internal/external thread of the valve slider (131), and wherein the connector shaft (275) is adapted to move the valve slider (131) in a first linear direction upon rotation of the drive motor in a first direction and in a second, opposite linear direction upon rotation of the drive motor in a second, opposite direction.

7. The linear actuator valve (100) of claim 5, wherein the connector shaft (275) is connected to the valve slider (131) by means of a connector piece (376), the connector piece (376) extending between the motor axis (M) and the longitudinal axis of the valve slider (131).

8. The linear actuator valve (100) of claim 7, wherein the connector shaft (275) comprises an external thread adapted to mesh with an internal thread at a first end (377) of the connector piece (376), and wherein the connector shaft (275) is adapted to move the connector piece (376) in a first linear direction upon rotation of the drive motor in a first direction and in a second, opposite linear direction upon rotation of the drive motor in a second, opposite direction.

9. The linear actuator valve (100) of claims 7 or 8, wherein the connector piece (376) comprises a recess (379) at a second end (378) adapted to receive the valve slider (131).

10. The linear actuator valve (100) of any of claims 1 to 9, wherein the linear actuator valve (100) comprises a sensor device (290) adapted to determine the position of the valve slider (131) and/or wherein the valve slider (131) has a first end (161) slidably received within the valve housing (130) and a second (162), opposite end, and wherein a first sensor element (291) of the sensor device (290) is attached to the second end (162) of the valve slider (131) and/or wherein a second sensor element (292) of the sensor device (290) is attached to the support member (140), the second sensor element (292) comprising a guide groove (295) adapted to guide the first sensor element (291) upon movement of the valve slider (131) with respect to the support member (140) and/or wherein the sensor device (290) is a potentiometer, preferably a taper potentiometer, adapted to change electrical resistance upon movement of the valve slider (131) with respect to the support member (140).

11. The linear actuator valve (100) of any of claims 1 to 10, the valve slider (131) has a first end (161) slidably received within the valve housing (130) and a second (162), opposite end, and wherein the support member (140) defines a casing adapted to at least partially enclose the second end (162) of the valve slider (131) in all positions.

12. The linear actuator valve (100) of any of claims 1 to 11, wherein the third fluid port (135) is an exhaust port and/or wherein the second fluid port (134) is adapted to be connected to a pneumatic or hydraulic actuator.

13. An adjustable support (101) comprising;
• a first member (102) movably connected to a second member (103);
• an actuator assembly adapted to move the first (102) and second (103) members with respect to each other, wherein the actuator assembly comprises the linear actuator valve (100) of any of claims 1 to 12.

14. The adjustable support (101) of claim 13, wherein the valve housing (130) is connected to the first member (102), and wherein the support member (140) is connected to the second member (103) of the adjustable support (101) such that when the first (102) and second (103) members are moved towards each other, the valve slider (131) is moved from its first position into its second position and when the first (102) and second (103) members are moved away from each other, the valve slider (131) is moved from its first position into its third position.

15. The adjustable support (101) of claim 14 , wherein the actuator assembly comprises a linear actuator (108), preferably a pneumatic spring, comprising at least one fluid port connected to the second fluid port (134) of the linear actuator valve (100) and/or wherein the actuator assembly comprises a control unit connected to the electro-mechanical actuator (270) and adapted to adjust a distance between the first (102) and second (103) members and wherein the control unit is adapted to activate the electro-mechanical actuator (270) to selectively move the valve slider (131) between its first, second and third positions, depending on a desired distance between the first (102) and second (103) members.

## Patentansprüche

1. Linearaktuatorventil (100) mit:
- einem Ventilgehäuse (130), das sich entlang einer Längsachse (L) erstreckt und einen ersten Fluidanschluss (133), der mit einer Druckfluidquelle verbindbar ist, einen zweiten Fluidanschluss (134), der mit dem ersten Fluidanschluss (133) verbindbar ist, und einen dritten Fluidanschluss (135) aufweist, der mit dem zweiten Fluidanschluss (134) verbindbar ist;
- einem Trägerelement (140), das relativ zum Ventilgehäuse (130) entlang einer ersten Achse bewegbar ist, die sich im Wesentlichen parallel zur Längsachse (L) des Ventilgehäuses (130) erstreckt;
- einem Ventilgleitelement (131), das innerhalb des Ventilgehäuses (130) gleitend bewegbar ist, wobei das Ventilgleitelement (131) bewegbar ist zwischen einer ersten Position, in der die Verbindung zwischen dem ersten Fluidanschluss (133) und dem zweiten Fluidanschluss (134) unterbrochen ist, und einer zweiten Position, in der der erste Fluidanschluss (133) mit dem zweiten Fluidanschluss (134) verbunden ist, und umgekehrt, wobei das Ventilgleitelement (131) ferner von seiner ersten Position, in der die Verbindung zwischen dem zweiten Fluidanschluss (134) und dem dritten Fluidanschluss (135) unterbrochen ist, in eine dritte Position bewegbar ist, in der der zweite Fluidanschluss (134) mit dem dritten Fluidanschluss (135) verbunden ist und die Verbindung mit dem ersten Fluidanschluss (133) unterbrochen ist, und umgekehrt, wobei das Ventilgleitelement (131) mit dem Trägerelement (140) verbunden ist,
wobei das Aktuatorventil (100) dazu eingerichtet ist, das Ventilgleitelement (131) zwischen seiner ersten, zweiten und dritten Position zu bewegen, wenn das Trägerelement (140)) und das Ventilgehäuse (130) sich relativ zueinander bewegen, und wobei das Aktuatorventil (100) ferner einen elektromechanischen Aktuator (270) aufweist, der dazu eingerichtet ist, das Ventilgleitelement (131) selektiv zwischen seiner ersten, zweiten und dritten Position zu bewegen.

2. Linearaktuatorventil (100) nach Anspruch 1, wobei der elektromechanische Aktuator (270) starr mit dem Trägerelement (140) verbunden oder verbindbar ist.

3. Linearaktuatorventil (100) nach Anspruch 1 oder 2, wobei der elektromechanische Aktuator (270) einen Elektromotor (271) aufweist, wobei der Elektromotor (271) über einen Getriebemechanismus (272) mit dem Ventilgleitelement (131) verbunden ist.

4. Linearaktuatorventil (100) nach Anspruch 3, wobei der Elektromotor (271) dazu eingerichtet ist, eine Antriebswelle (132) um eine Motorachse (M) zu drehen, wobei die Motorachse (M) parallel und/oder quer zur Längsachse (L) des Ventilgehäuses (130) angeordnet ist.

5. Linearaktuatorventil (100) nach Anspruch 4, wobei sich die Motorachse (M) entlang der Längsachse des Ventilgleitelements (131) erstreckt oder die Motorachse (M) von der Längsachse des Ventilgleitelements (131) beabstandet ist, und/oder wobei der Getriebemechanismus (272) eine Verbinderwelle (275) aufweist, wobei sich die Verbinderwelle (275) entlang der Motorachse (M) des Elektromotors (271) erstreckt, und wobei der Elektromotor (271) dazu eingerichtet ist, die Verbinderwelle (275) um die Motorachse (M) zu drehen, und/oder wobei die Verbinderwelle (275) dazu eingerichtet ist, die Antriebswelle (274) des Elektromotors (271) lösbar mit dem Ventilgleitelement (131) zu verbinden.

6. Linearaktuatorventil (100) nach Anspruch 5, wobei die Verbinderwelle (275) ein Außen-/Innengewinde aufweist, das dazu eingerichtet ist, mit einem Innen-/Außengewinde des Ventilgleitelements (131) in Eingriff zu kommen, und wobei die Verbinderwelle (275) dazu eingerichtet ist, das Ventilgleitelement (131) in eine erste lineare Richtung zu bewegen, wenn der Antriebsmotor sich in eine erste Richtung dreht, und in eine zweite, entgegengesetzte lineare Richtung zu bewegen, wenn der Antriebsmotor sich in eine zweite, entgegengesetzte Richtung dreht.

7. Linearaktuatorventil (100) nach Anspruch 5, wobei die Verbinderwelle (275) mittels eines Verbinderstücks (376) mit dem Ventilgleitelement (131) verbunden ist, wobei sich das Verbinderstück (376) zwischen der Motorachse (M) und der Längsachse des Ventilgleitelements (131) erstreckt.

8. Linearaktuatorventil (100) nach Anspruch 7, wobei die Verbinderwelle (275) ein Außengewinde aufweist, das dazu eingerichtet ist, mit einem Innengewinde an einem ersten Ende (377) des Verbinderstücks (376) in Eingriff zu kommen, und wobei die Verbinderwelle (275) dazu eingerichtet ist, das Verbinderstück (376) in eine erste lineare Richtung zu bewegen, wenn der Antriebsmotor sich in eine erste Richtung dreht, und in eine zweite, entgegengesetzte lineare Richtung zu bewegen, wenn der Antriebsmotor sich in eine zweite, entgegengesetzte Richtung dreht.

9. Linearaktuatorventil (100) nach Anspruch 7 oder 8, wobei das Verbinderstück (376) an einem zweiten Ende (378) eine Vertiefung (379) aufweist, die dazu eingerichtet ist, das Ventilgleitelement (131) aufzunehmen.

10. Linearaktuatorventil (100) nach einem der Ansprüche 1 bis 9, wobei das Linearaktuatorventil (100) eine Sensoreinrichtung (290) aufweist, die dazu eingerichtet ist, die Position des Ventilgleitelements (131) zu bestimmen, und/oder wobei das Ventilgleitelement (131) ein erstes Ende (161), das im Ventilgehäuse (130) gleitend aufgenommen ist, und ein zweites gegenüberliegendes Ende (162) aufweist, und wobei ein erstes Sensorelement (291) der Sensoreinrichtung (290) am zweiten Ende (162) des Ventilgleitelements (131) befestigt ist, und/oder wobei ein zweites Sensorelement (292) der Sensoreinrichtung (290) am Trägerelement (140) befestigt ist, wobei das zweite Sensorelement (292) eine Führungsnut (295) aufweist, die dazu eingerichtet ist, das erste Sensorelement (291) bei einer Bewegung des Ventilgleitelements (131) bezüglich des Trägerelements (140) zu führen, und/oder wobei die Sensoreinrichtung (290) ein Potentiometer ist, vorzugsweise ein Taper-Potentiometer, das dazu geeignet ist, den elektrischen Widerstand bei einer Bewegung des Ventilgleitelements (131) bezüglich des Trägerelements (140) zu ändern.

11. Linearaktuatorventil (100) nach einem der Ansprüche 1 bis 10, wobei das Ventilgleitelement (131) ein erstes Ende (161), das im Ventilgehäuse (130) gleitend aufgenommen ist, und ein zweites, gegenüberliegendes Ende (162) aufweist, und wobei das Trägerelement (140) ein Gehäuse definiert, das dazu eingerichtet ist, das zweite Ende (162) des Ventilgleitelements (131) in allen Positionen mindestens teilweise zu umschließen.

12. Linearaktuatorventil (100) nach einem der Ansprüche 1 bis 11, wobei der dritte Fluidanschluss (135) ein Auslassanschluss ist, und/oder wobei der zweite Fluidanschluss (134) dazu eingerichtet ist, mit einem Pneumatik- oder Hydraulikaktuator verbunden zu werden.

13. Verstellbarer Träger (101), mit:
- einem ersten Element (102), das mit einem zweiten Element (103) beweglich verbunden ist; und
- einer Aktuatoranordnung, die dazu eingerichtet ist, das erste (102) und das zweite (103) Element relativ zueinander zu bewegen, wobei die Aktuatoranordnung das Linearaktuatorventil (100) nach einem der Ansprüche 1 bis 12 aufweist.

14. Verstellbarer Träger (101) nach Anspruch 13, wobei das Ventilgehäuse (130) mit dem ersten Element (102) verbunden ist, und wobei das Trägerelement (140) mit dem zweiten Element (103) des verstellbaren Trägers (101) verbunden ist, so dass, wenn das erste (102) und das zweite (103) Element aufeinander zu bewegt werden, das Ventilgleitelement (131) von seiner ersten Position in seine zweite Position bewegt wird, und wenn das erste (102) und das zweite (103) Element voneinander weg bewegt werden, das Ventilgleitelement (131) von seiner ersten Position in seine dritte Position bewegt wird.

15. Verstellbarer Träger (101) nach Anspruch 14, wobei die Aktuatoranordnung einen Linearaktuator (108), vorzugsweise eine Gasdruckfeder, aufweist, der mindestens einen Fluidanschluss aufweist, der mit dem zweiten Fluidanschluss (134) des Linearaktuatorventils (100) verbunden ist, und/oder wobei die Aktuatoranordnung eine Steuereinheit aufweist, die mit dem elektromechanischen Aktuator (270) verbunden und dazu eingerichtet ist, einen Abstand zwischen dem ersten (102) und dem zweiten (103) Element einzustellen, und wobei die Steuereinheit dazu eingerichtet ist, den elektromechanischen Aktuator (270) zu aktivieren, um das Ventilgleitelement (131) in Abhängigkeit von einem gewünschten Abstand zwischen dem ersten (102) und dem zweiten (103) Element selektiv zwischen seiner ersten, zweiten und dritten Position zu bewegen.

## Revendications

1. Soupape d'actionneur linéaire (100) comprenant :
un boîtier de soupape (130) s'étendant le long d'un axe longitudinal (L) et comprenant un premier orifice de fluide (133) pouvant être raccordé à une source de fluide sous pression, un deuxième orifice de fluide (134) pouvant être raccordé au premier orifice de fluide (133) et un troisième orifice de fluide (135) pouvant être raccordé au deuxième orifice de fluide (134) ;
un élément de support (140) mobile par rapport au boîtier de soupape (130) le long d'un premier axe, qui est sensiblement parallèle à l'axe longitudinal (L) du boîtier de soupape (130) ;
un tiroir de soupape (131) mobile, de manière coulissante, à l'intérieur du boîtier de soupape (130), ledit tiroir de soupape (131) étant mobile entre une première position dans laquelle le premier orifice de fluide (133) est déconnecté du deuxième orifice de fluide (134), et une deuxième position dans laquelle le premier orifice de fluide (133) est raccordé au deuxième orifice de fluide (134), et vice versa,
dans laquelle le tiroir de soupape (131) est en outre mobile à partir de sa première position, dans laquelle le deuxième orifice de fluide (134) est déconnecté du troisième orifice de fluide (135), dans une troisième position, dans laquelle le deuxième orifice de fluide (134) est raccordé au troisième orifice de fluide (135) et déconnecté du premier orifice de fluide (133), et vice versa, le tiroir de soupape (131) étant raccordé à l'élément de support (140),
dans laquelle la soupape d'actionneur (100) est adaptée pour déplacer le tiroir de soupape (131) entre ses première, deuxième et troisième positions, lorsque l'élément de support (140) et le boîtier de soupape (130) se déplacent l'un par rapport à l'autre, et dans laquelle la soupape d'actionneur (100) comprend en outre un actionneur électromécanique (270) adapté pour déplacer sélectivement le tiroir de soupape (130) entre ses première, deuxième et troisième positions.

2. Soupape d'actionneur linéaire (100) selon la revendication 1, dans laquelle l'actionneur électromécanique (270) est raccordé ou peut être raccordé, de manière rigide, à l'élément de support (140).

3. Soupape d'actionneur linéaire (100) selon la revendication 1 ou 2, dans laquelle l'actionneur électromécanique (270) comprend un moteur électrique (271), ledit moteur électrique (271) étant raccordé au tiroir de soupape (131) via un mécanisme d'engrenage (272).

4. Soupape d'actionneur linéaire (100) selon la revendication 3, dans laquelle le moteur électrique (271) est adapté pour faire tourner un arbre d'entraînement (132) autour d'un axe de moteur (M), ledit axe de moteur (M) étant agencé parallèlement et/ou transversalement à l'axe longitudinal (L) du boîtier de soupape (130).

5. Soupape d'actionneur linéaire (100) selon la revendication 4, dans laquelle l'axe de moteur (M) s'étend le long de l'axe longitudinal du tiroir de soupape (131) ou l'axe de moteur (M) est espacé de l'axe longitudinal du tiroir de soupape (131) et/ou dans laquelle le mécanisme d'engrenage (272) comprend un arbre de connecteur (275), l'arbre de connecteur (275) s'étendant le long de l'axe de moteur (M) du moteur électrique (271), et dans laquelle le moteur électrique (271) est adapté pour faire tourner l'arbre de connecteur (275) autour de l'axe de moteur (M) et/ou dans laquelle l'arbre de connecteur (275) est adapté pour raccorder, de manière amovible, l'arbre d'entraînement (274) du moteur électrique (271) avec le tiroir de soupape (131).

6. Soupape d'actionneur linéaire (100) selon la revendication 5, dans laquelle l'arbre de connecteur (275) comprend un filetage externe / interne adapté pour s'engrener avec un filetage interne / externe du tiroir de soupape (131), et dans laquelle l'arbre de connecteur (275) est adapté pour déplacer le tiroir de soupape (131) dans une première direction linéaire suite à la rotation du moteur d'entraînement dans une première direction et dans une seconde direction linéaire opposée suite à la rotation du moteur d'entraînement dans une seconde direction opposée.

7. Soupape d'actionneur linéaire (100) selon la revendication 5, dans laquelle l'arbre de connecteur (275) est raccordé au tiroir de soupape (131) au moyen d'une pièce de connecteur (376), la pièce de connecteur (376) s'étendant entre l'axe de moteur (A) et l'axe longitudinal du tiroir de soupape (131).

8. Soupape d'actionneur linéaire (100) selon la revendication 7, dans laquelle l'arbre de connecteur (275) comprend un filetage externe adapté pour s'engrener avec un filetage interne au niveau d'une première extrémité (377) de la pièce de connecteur (376) et dans laquelle l'arbre de connecteur (275) est adapté pour déplacer la pièce de connecteur (376) dans une première direction linéaire suite à la rotation du moteur d'entraînement dans une première direction et dans une seconde direction linéaire opposée suite à la rotation du moteur d'entraînement dans une seconde direction opposée.

9. Soupape d'actionneur linéaire (100) selon les revendications 7 ou 8, dans laquelle la pièce de connecteur (376) comprend un évidement (379) au niveau d'une seconde extrémité (378) adaptée pour recevoir le tiroir de soupape (131).

10. Soupape d'actionneur linéaire (100) selon l'une quelconque des revendications 1 à 9, dans laquelle la soupape d'actionneur linéaire (100) comprend un dispositif de capteur (290) adapté pour déterminer la position du tiroir de soupape (131), et/ou dans laquelle le tiroir de soupape (131) a une première extrémité (161) reçue, de manière coulissante, à l'intérieur du boîtier de soupape (130) et une seconde extrémité (162) opposée, et dans laquelle un premier élément de capteur (291) du dispositif de capteur (290) est fixé à la seconde extrémité (162) du tiroir de soupape (131) et/ou dans laquelle le second élément de capteur (292) du dispositif de capteur (290) est fixé à l'élément de support (140), le second élément de capteur (292) comprenant une rainure de guidage (295) adaptée pour guider le premier élément de capteur (291) suite au mouvement du tiroir de soupape (131) par rapport à l'élément de support (140) et/ou dans laquelle le dispositif de capteur (290) est un potentiomètre, de préférence un potentiomètre conique, adapté pour modifier la résistance électrique suite au mouvement du tiroir de soupape (131) par rapport à l'élément de support (140).

11. Soupape d'actionneur linéaire (100) selon l'une quelconque des revendications 1 à 10, le tiroir de soupape (131) a une première extrémité (161) reçue, de manière coulissante, à l'intérieur du boîtier de soupape (130) et une seconde extrémité (162) opposée, et dans laquelle l'élément de support (140) définit un boîtier adapté pour enfermer au moins partiellement la seconde extrémité (162) du tiroir de soupape (131) dans toutes les positions.

12. Soupape d'actionneur linéaire (100) selon l'une quelconque des revendications 1 à 11, dans laquelle le troisième orifice de fluide (135) est un orifice d'échappement et/ou dans laquelle le deuxième orifice de fluide (134) est adapté pour être raccordé à un actionneur pneumatique ou hydraulique.

13. Support ajustable (101) comprenant :
un premier élément (102) raccordé, de manière mobile, à un second élément (103) ;
un ensemble d'actionneur adapté pour déplacer les premier (102) et second (103) éléments l'un par rapport à l'autre, dans lequel l'ensemble d'actionneur comprend une soupape d'actionneur linéaire (100) selon l'une quelconque des revendications 1 à 12.

14. Support ajustable (101) selon la revendication 13, dans lequel le boîtier de soupape (130) est raccordé au premier élément (102), et dans lequel l'élément de support (140) est raccordé au second élément (103) du support ajustable (101) de sorte que lorsque les premier (102) et second (103) éléments sont déplacés l'un vers l'autre, le tiroir de soupape (131) est déplacé de sa première position à sa deuxième position et lorsque les premier (102) et second (103) éléments sont éloignés l'un de l'autre, le tiroir de soupape (131) est déplacé de sa première position dans sa troisième position.

15. Support ajustable (101) selon la revendication 14, dans lequel l'ensemble d'actionneur comprend un actionneur linéaire (108), de préférence un ressort pneumatique, comprenant au moins un orifice de fluide raccordé au deuxième orifice de fluide (134) de la soupape d'actionneur linéaire (100) et/ou dans lequel l'ensemble d'actionneur comprend une unité de commande raccordée à l'actionneur électromécanique (270) et adapté pour ajuster une distance entre les premier (102) et second (103) éléments et dans lequel l'unité de commande est adaptée pour activer l'actionneur électromécanique (270) afin de déplacer sélectivement le tiroir de soupape (131) entre ses première, deuxième et troisième positions, en fonction d'une distance souhaitée entre les premier (102) et second (103) éléments.
